# EUROPÄISCHE PATENTSCHRIFT

(11) **EP 1 216 904 B1**
(45) Veröffentlichungstag und Bekanntmachung des Hinweises auf die Patenterteilung: **08.09.2010**
(21) Anmeldenummer: 01128870.1
(22) Anmeldetag: 05.12.2001
(51) Int. Cl.: B60T 8/36, H01F 5/04, H01F 41/10

(54) **Kontaktierungsvorrichtung und eine Magnetspule**
Connecting device and solenoid
Dispositif connecteur et solénoide

(30) Priorität: 19.12.2000 DE 10063471
(43) Veröffentlichungstag der Anmeldung: 26.06.2002
(73) Patentinhaber: CLAAS Industrietechnik GmbH, 33106 Paderborn (DE)
(72) Erfinder: Wojciechowski, Thorsten, 33100 Paderborn (DE)

(56) Entgegenhaltungen:
- EP-A- 0 997 363
- WO-A-98/40260
- US-A- 5 326 161
- US-A- 5 941 282
- US-A- 6 124 775

## Beschreibung

Die Erfindung betrifft eine Vorrichtung zur Kontaktierung einer Stelleinheit mit elektrischen Anschlüssen eines Funktionsträgers, insbesondere eines hydraulischen Ventilblocks, wobei die Stelleinheit mit einer Magnetspule von dem Funktionsträger abragt.

Aus der DE 198 48 039 A1 ist eine Vorrichtung zur Kontaktierung eines Magnetventils mit einer einem Ventilblock zugeordneten elektronischen Steuereinheit bekannt, bei der Magnetventile von einer Seitenwand des Ventilblocks abragen. Kontaktelemente einer Magnetspule des Magnetventils sind auf einer dem Ventilblock abgewandten Seite des Magnetventils angeordnet und sind über Verbindungsmittel mit der elektronischen Steuereinheit verbunden. Eine solche Anordnung der elektronischen Steuereinheit ist unerwünscht bei Vorrichtungen, bei denen Magnetventile in entgegengesetzten Richtungen zueinander jeweils von einer Seitenwand des Ventilblocks abragen.

Aus einem Prospekt der Firma Bosch über Wegeventile NG6 Serie D, Ausgabe 2.0, ist eine Vorrichtung zur Kontaktierung eines Magnetventiles mit einer elektronischen Steuereinheit für einen Ventilblock bekannt, bei der die elektronische Steuereinheit auf einer Oberseite des Ventilblocks angeordnet ist. Umfangsseitig einer Magnetspule des Magnetventils ist ein Adapter aufgesetzt, mittels dessen an einem Umfang der Magnetspule angeordnete Kontaktelemente elektrisch mit Kontaktelementen der elektronischen Steuereinheit gekoppelt werden. Die bekannte Vorrichtung weist einen erheblichen Bauraumbedarf auf, wobei der Kontaktierungsaufwand relativ groß ist.

Aufgabe der vorliegenden Erfindung ist es daher, eine Vorrichtung zur Kontaktierung einer Stelleinheit mit elektrischen Anschlüssen eines Funktionsträgers derart weiterzubilden, dass mit geringem Materialaufwand der erforderliche Bauraum verringert werden kann.

Gelöst wird die Aufgabe mit den oberbegrifflichen und kennzeichnenden Merkmalen des Anspruchs 1.

Der besondere Vorteil der Erfindung besteht darin, dass durch Anordnung von Kontaktelementen der Stelleinheit in einem dem Funktionsträger zugewandten stirnseitigen Bereich eine direkte Kontaktierung der Magnetspule mit Kontaktelementen des Funktionsträgers ermöglicht wird. Auf diese Weise weist die erfindungsgemäße Vorrichtung einen kompakten Aufbau auf. Der Materialaufwand für Kontaktierungsmittel kann erheblich reduziert werden. Grundgedanke der Erfindung ist es, einen möglichst kurzen elektrischen Verbindungsweg vorzusehen. Unerwünschte Störungen auf elektrische Leitungen werden durch die Verkürzung der elektrischen Anschlussleitung einerseits und die Integration in ein abgeschirmtes Gehäuse der Stelleinheit andererseits weitgehend vermieden. Hierdurch kann die elektromagnetische Verträglichkeit wesentlich verbessert werden. Auf diese Weise können insbesondere ungünstigen Einflüssen auf die elektrische Leitfähigkeit der Kontaktierungsmittel der Vorrichtung reduziert werden, was eine die Lebensdauer der Vorrichtung verlängernde Wirkung hat.

Nach einer besonderen Ausführungsform der Erfindung dient eine Seitenwand des Funktionsträgers als Anlagefläche für eine Stirnseite der Stelleinheit. Die Stelleinheit wird auf eine von der Seitenwand des Funktionsträgers abragende Rohrgestell aufgeschoben und durch Kontaktierung der korrespondierenden Kontaktelemente der Magnetspule einerseits und des Funktionsträgers andererseits mechanisch an der Seitenwand des Funktionsträgers festgelegt. Vorteilhaft dienen die Kontaktelemente der Magnetspule oder des Funktionsträgers nicht nur zur elektrischen Verbindung, sondern auch zur vereinfachten mechanischen Ankopplung bzw. Verbindung der Magnetspule an dem Gehäuse des Ventilblockes, was die Montage der Stelleinheit an den Funktionsträger erleichtert.

Nach einer Weiterbildung der Erfindung sind die Kontaktelemente als Kontaktstifte sowie zu den Kontaktstiften korrespondierende Aufnahmen ausgebildet. Die Kontaktierung wird durch klemmendes Einstecken der Kontaktstifte in die jeweiligen Aufnahmen bewirkt. Vorteilhaft ermöglicht diese lösbare Steckverbindung nicht nur eine elektrische Verbindung, sondern fördert zugleich die mechanische Verbindung zwischen der Magnetspule einerseits und dem Gehäuse des Funktionsträgers andererseits.

Weiterhin betrifft die Erfindung eine Magnetspule zur Verwendung in einer Vorrichtung nach einem der Ansprüche 1 bis 9, mit einem hohlzylinderförmigen Wicklungsträger, der eine Wicklungsaufnahme aufweist zur Aufnahme eines Wicklungsdrahtes, wobei Enden des Wicklungsdrahtes mit von außen zugänglichen Kontaktstiften verbunden sind.

Aus der DE 197 27 414 A1 ist eine Magnetspule für ein Ventil bekannt, das einen hohlzylinderförmigen Wicklungsträger mit einer Wicklungsaufnahme zur Aufnahme eines Wicklungsdrahtes aufweist. Von außen zugängliche Kontaktstifte der Magnetspule sind in den Wicklungsträger eingespritzt. Nachteilig an der bekannten Magnetspule ist, dass zusätzliche elektrische Verbindungsmittel vorgesehen sein müssen zur Verbindung des Kontaktstiftes mit Enden des Wicklungsdrahtes.

Aufgabe der vorliegenden Erfindung ist es weiterhin, eine Magnetspule gemäss dem Oberbegriff des Anspruchs 1, wie offenbart in US-A- 3 717 179, derart weiterzubilden, dass der Herstellungsaufwand für eine Magnetspule weiter verringert wird.

Zur Lösung dieser Aufgabe ist die erfindungsgemäße Magnetspule in Verbindung mit dem Oberbegriff des Patentanspruchs 10 dadurch gekennzeichnet, dass die Kontaktstifte mit einem inneren Ende in die Wicklungsaufnahme eingreifen, wobei das innere Ende mit dem Ende des Wicklungsdrahtes elektrische verbunden ist, und dass der Wicklungsträger umfangsseitig durch eine passgenaue Gehäusehülse umschlossen ist.

Der besondere Vorteil der erfindungsgemäßen Magnetspule besteht darin, dass durch das Vorsehen von inneren Enden der Kontaktstifte in einem Bereich der Wicklungsaufnahme eine unmittelbare Kontaktierung derselben mit einem Ende der Wicklungsdrahtes ermöglicht wird. Hierdurch kann auf herstellungstechnisch einfache Weise eine sichere Kontaktierung der Enden des Wicklungsdrahtes mit den außen zugänglichen Kontaktstiften ermöglicht werden.

Nach einer besonderen Ausführungsform der Magnetspule weist der Wicklungsträger eine die Wicklungsaufnahme begrenzende Radialwand auf, die zu Kontaktstiften korrespondierende Durchgangsbohrungen aufweist, so dass eine lagerichtige Positionierung der Kontaktstifte am Wicklungsträger ermöglicht wird. Zur Herstellung der Magnetspule werden die vorgefertigten Kontaktstifte in die Durchgangsbohrungen so weit eingesetzt, dass innere Enden in einem vorgesehenen Bereich der Wicklungsaufnahme angeordnet sind. In einem weiteren Verfahrensschritt wird der Wicklungsdraht um den Wicklungsträger bzw. um die Wicklungsaufnahme herumgewikkelt, wobei Enden des Wicklungsdrahtes unmittelbar mit den inneren Enden der Kontaktstifte zur Anlage kommen und mit denselben durch bekannte Verbindungsverfahren elektrisch verbunden werden. Auf diese Weise kann eine einfache Herstellung der Magnetspule, insbesondere der Kontaktierung zwischen Enden des Wicklungsdrahtes einerseits und Enden eines von außen zugänglichen Kontaktstiftes andererseits, ermöglicht werden.

Nach einer Weiterbildung der Magnetspule wird der Wicklungsträger an einer Stirnseite durch eine Kreisringplatte abgedeckt, wobei umfangsseitig zwischen der Kreisringplatte und einer den Wicklungsträger umschließenden Gehäusehülse eine Dichtung vorgesehen ist zur Vermeidung des Eindringens von unerwünschter Feuchtigkeit in den Innenraum der Magnetspule. Auf einer gegenüberliegenden Stirnseite der Magnetspule ist eine weitere Dichtung, vorzugsweise eine O-Ring, vorgesehen, so dass die Magnetspule vollständig abgedichtet ist. Durch die Integration der Anschlüsse in der Magnetspule ist keine zusätzliche Dichtung erforderlich.

Ausführungsbeispiele der Erfindung werden nachfolgend anhand der Zeichnungen näher erläutert.

Es zeigen:
- Figur 1: eine perspektivische Darstellung eines Ventilblockes mit an gegenüberliegenden Seitenwänden angeordneten Magnetventilen, wobei Magnetspulen der Magnetventile an einer Stirnseite axial abragende Kontaktstifte aufweisen,
- Figur 2: eine perspektivische Darstellung eines Ventilblockes mit an gegenüberliegenden parallelen Seitenwänden abragenden Magnetventilen, wobei von der Seitenwand des Ventilblockes Kontaktstifte abragen zur Kontaktierung-einer in einem Gehäuse des Ventilblockes integrierten elektronischen Steuereinheit mit der Magnetspule,
- Figur 3: eine perspektivische Darstellung eines Ventilblockes mit an gegenüberliegenden Seitenwänden abragenden Magnetventilen, wobei auf einer Oberseite des Ventilblockes eine elektronische Steuereinheit als gesonderte Baueinheit befestigt angeordnet ist und
- Figur 4: eine Explosionsdarstellung einer Magnetspule.

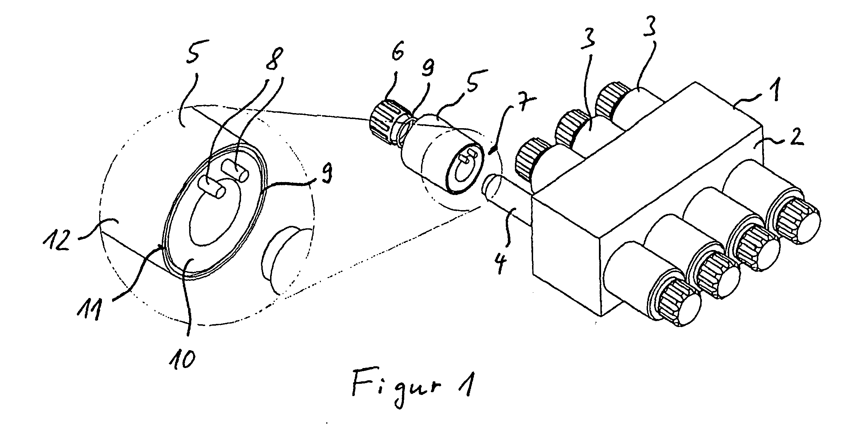

In Figur 1 ist eine Ventileinrichtung dargestellt, die im Wesentlichen aus einem quaderförmigen Gehäuse 1 für einen Ventilblock und von jeweils parallelen Seitenwänden 2 des Gehäuses 1 abragende Magnetventile 3 besteht. Die Magnetventile 3 sind reihenförmig angeordnet, wobei die beiden Reihen gegenüberliegender Magnetventile 3 eine gemeinsame Erstreckungsebene aufspannen.

In dem Gehäuse 1 des Ventilblockes sind in bekannte Weise Bauteile enthalten, die die Richtung, die Größe oder den Druck des Volumenstroms einer Flüssigkeit steuern, welche durch nicht dargestellte Öffnungen des Ventilblockes 1 zuund abgeführt wird. Die so gebildete Ventileinheit kann beispielsweise als Wegeventileinheit eingesetzt sein.

Zur Betätigung dieser Ventileinheit dienen die Magnetventile 3, die im Wesentlichen jeweils durch eine einen verschiebbaren Magnetkern aufnehmende und von der Seitenwand 2 abragende Hülse 4 und eine auf die Hülse 4 aufschiebbare Magnetspule 5 gebildet ist. Wie andeutungsweise aus Figur 1 ersichtlich ist, weist die Hülse 4 an einem freien Ende ein Gewinde auf, so dass nach dem Aufschieben der Magnetspule 5 dieselbe durch Betätigung einer Überwurfmutter 6 an die Seitenwand 2 des Ventilblockgehäuses 1 festlegbar ist.

Zur Kontaktierung des Magnetventils 3 bzw. der Magnetspule 5 mit einer in dem Gehäuse 1 des Ventilblockes integrierten, nicht dargestellten elektronischen Steuereinheit, die auf einer Oberseite des Ventilblockes angeordnet ist, weist die Magnetspule 5 in einem dem Ventilblock 1 zugewandten stirnseitigen Bereich 7 zwei Kontaktelemente 8 auf, die mit nicht dargestellten, an der Seitenwand 2 angeordneten korrespondierenden Kontaktelementen elektrisch verbindbar sind. An die in der Seitenwand 2 eingefassten Kontaktelemente können sich elektrische Leitungen anschließen, die zu entsprechenden Anschlüssen der elektronischen Steuereinheit führen. Alternativ kann die elektronische Steuereinheit innerhalb des Gehäuses 1 auch so positioniert sein, dass die in den Seitenwänden 2 eingefassten Kontaktelemente die Anschlüsse der elektronischen Steuereinheit bilden.

Die elektronische Steuereinheit ist benachbart zu dem Ventilblock innerhalb des Gehäuses 1 angeordnet, wobei nach den vorliegenden Ausführungsbeispielen sich die elektronische Steuereinheit an einer Oberseite des Ventilblockes anschließt. Damit der elektrische Verbindungsweg zwischen den Kontaktelementen 8 der Magnetspule 5 und den Anschlüssen der elektronischen Steuereinheit möglichst kurz ist, sind die Kontaktelemente 8 bzw. die korrespondierenden Kontaktelemente der Seitenwände 2 in einem zur Oberseite des Gehäuses 1 nahen Bereich angeordnet.

Wie aus Figur 1 ersichtlich ist, sind die Kontaktelemente 8 als Kontaktstifte ausgebildet, die in die als Aufnahmen ausgebildeten Kontaktelemente der Seitenwände 2 klemmend einsteckbar sind. Die Kontaktstifte 8 ragen von einer stirnseitigen Ringfläche 10 der Magnetspule 5 in axialer Richtung ab, wobei sie sich in einem zu einer Außenwandkante 11 der Magnetspule 5 nahen Bereich erstrecken. Hierdurch wird eine zu der elektronischen Steuereinheit orientierten Lage der Kontaktstifte 8 gewährleistet.

Alternativ können die Kontaktstifte auch von einer Mantelfläche 12 der Magnetspule 5 in radialer Richtung winkelförmig abragen, so dass eine direkte Verbindung mit der elektronischen Steuereinheit gewährleistet ist. Die Kontaktstifte würden in diesem Fall hakenförmig oder zickzackförmig ausgebildet sein.

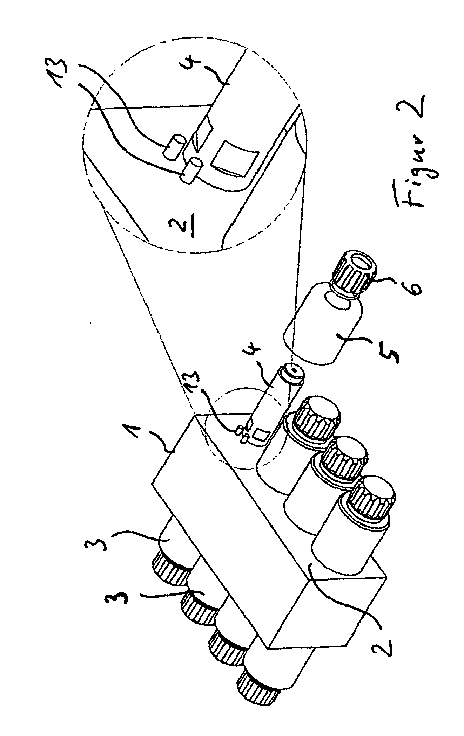

Nach einer alternativen Ausführungsform gemäß Figur 2 kann im Unterschied zu der Ausführungsform gemäß Figur 1 eine umgekehrten Ausbildung der Kontaktelemente der Magnetspule 5 einerseits und des Gehäuses 1 andererseits erfolgen. Wie Figur 2 deutlich zeigt, können von der Seitenwand 2 Kontaktstifte 13 abragen, die in korrespondierende nicht dargestellte hülsenförmige Aufnahmen der Magnetspule 5 eingreifen. Hierdurch wird die gleiche elektrische und mechanische Verbindung der Magnetspule 5 mit dem Gehäuse 1 bewirkt wie nach dem Ausführungsbeispiel gemäß Figur 1. Vorteilhaft dient die Hülse 4 als Führung beim Aufsetzen der Magnetspule 5 an die Seitenwand, wobei durch die Kontaktierung der korrespondierenden Kontaktelemente der Magnetspulen 5 einerseits und des Gehäuses 1 andererseits eine mechanische Verbindung erzeugt wird, die das Aufschrauben der Überwurfmutter 6 erleichtert.

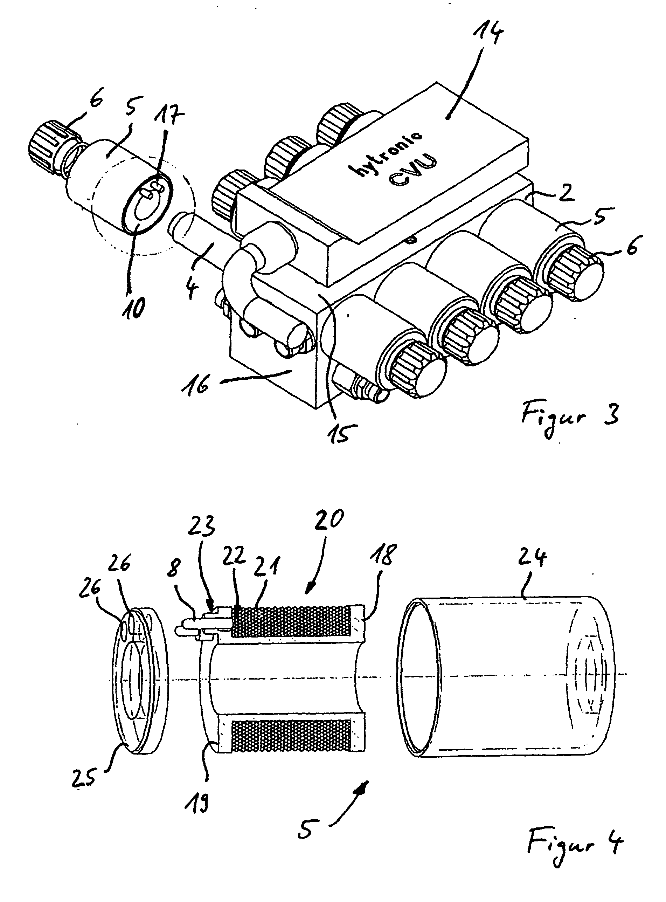

Nach einem weiteren Ausführungsbeispiel gemäß Figur 3 ist um Unterschied zu den vorhergehenden Ausführungsbeispielen die elektronische Steuereinheit als gesonderte Baueinheit 14 ausgebildet, die auf eine Oberseite 15 eines Ventilblokkes 16 aufsetz- und festlegbar angeordnet ist. Die Kontaktierung der Magnetspulen 5 mit Anschlüssen der elektronischen Baueinheit 14 erfolgt in oben beschriebener Weise durch Anlage der Ringfläche 10 der Magnetspulen 5 an die Seitenwände 2 unter Eingreifen von Kontaktstiften 17 in entsprechende Aufnahmen des Ventilblockes 16. Es sind weitere nicht dargestellte elektrische Verbindungsmittel, beispielsweise Steckverbinder, zwischen dem Ventilblock 16 und der elektronischen Steuereinheit 14 vorgesehen, damit eine elektrische Verbindung zwischen der Magnetspule 5 und der elektronischen Steuereinheit 14 gewährleistet ist.

In Figur 4 ist ein Aufbau der Magnetspule 5 dargestellt. Die Magnetspule 5 weist einen hohlzylinderförmigen Wicklungsträger 18 auf, der in stirnseitigen Endbereichen eine ringförmige Radialwand 19 aufweist zur Begrenzung einer Wicklungsaufnahme 20. In der Wicklungsaufnahme 20 ist ein Wicklungsdraht 21 gemäß einer üblichen Lagenwicklung aufgewickelt, wobei Enden des Wicklungsdrahtes 21 jeweils mit inneren Enden 22 der Kontaktstifte 8 elektrisch verbunden sind.

Zur Herstellung der Magnetspule 5 werden die Kontaktstifte 8 in Durchgangsbohrungen 23 einer Radialwand 19 insoweit eingeschoben, dass das innere Ende 22 an einer vorgesehenen Stelle innerhalb der Wicklungsaufnahme 20 positioniert ist. In einem weiteren Schritt wird der Wicklungsdraht 21 in bekannter Weise um den Wicklungsträger 18 bzw. in die Wicklungsaufnahme 20 aufgewickelt, wobei durch bekannte Verbindungstechniken (Löten etc.) ein Ende des Wicklungsdrahtes 21 mit dem inneren Ende 22 des Kontaktstiftes 8 verbunden wird. Nachfolgend wird der Wicklungsträger 18 in eine topfförmige Gehäusehülse 24 eingesetzt, die den Wicklungsträger 18 umfangsseitig abdeckt. Zum dichtenden Verschließen ist eine Kreisringplatte 25 vorgesehen, die umfangsseitig eine entsprechend in Figur 1 dargestellte Dichtung 9 aufweist und auf eine Stirnseite der Gehäusehülse 24 dichtend aufgesetzt wird. Damit die Kontaktstifte 8 nach außen hin abragen, weist die Kreisringplatte 25 entsprechende Öffnungen 26 zum Durchtritt der Kontaktstifte 8 auf. Die Dichtungen 9 sind als O-Ring an beiden Stirnseiten der Magnetspule 5 angeordnet.

Alternativ können die zu den Kontaktelementen 8 der Magnetspule 5 korrespondierende Kontaktelemente des Ventilblocks 1 auch lediglich über einen Kabelstrang mit einer nicht dargestellten zentralen Steckeinheit verbunden sein. Die zentrale Steckeinheit kann an einer Stirnseite des Ventilblocks 1 angeordnet sein. Vorzugsweise sind die von gegenüberliegenden Kontaktelementen ausgehenden Leitungen eines gemeinsamen Bezugspotential, insbesondere der Masseleitung, zusammengeführt und dann über eine gemeinsame Leitung mit der zentralen Steckeinheit verbunden. Der Kabelstrang ist innerhalb des Ventilblocks 1 angeordnet, so dass eine rationelle Kabelführung unter vollständiger Abschirmung gewährleistet ist.

## Patentansprüche

1. Vorrichtung zur Kontaktierung einer Stelleinheit (5) mit elektrischen Anschlüssen eines Funktionsträgers (1, 14), insbesondere eines hydraulischen Ventilblocks (1, 14), wobei die Stelleinheit mit einer Magnetspule (5) von dem Funktionsträger (1, 14) abragt, wobei
in einem dem Ventilblock (1, 14) zugewandten stirnseitigen Bereich (7) der Stelleinheit (5) Kontaktelemente (8) derart angeordnet sind, dass die Kontaktelemente (8) am Ventilblock (1, 14) unmittelbar elektrisch verbindbar sind und **dadurch gekennzeichnet dass** die Stelleinheit eine Magnetspule (5) umfasst und die Magnetspule (5) auf ein von Seitenwänden (2) des Ventilblocks (1) abragendes Rohrgestell (4) aufschiebbar und unter Anlage einer Ringfläche (10) an der Seitenwand (2) mit in der Seitenwand (2) eingefassten korrespondierenden Kontaktelementen verbindbar ist.

2. Vorrichtung nach Anspruch 1, **dadurch gekennzeichnet, dass** die Kontaktelemente (8) der Stelleinheit (5) an einer dem Funktionsträger (1, 14) zugewandten Stirnseite (10) der Stelleinheit (5) angeordnet sind.

3. Vorrichtung nach einem der Ansprüche 1 bis 2 **dadurch gekennzeichnet, dass** die in der Seltenwand (2) integrierten Kontaktelemente elektrische Anschlüsse für eine elektronische Steuereinhelt bilden, mittels derer die in dem Ventilblock (1) angeordneten Ventile steuerbar sind.

4. Vorrichtung nach einem der Ansprüche 1 bis 3 **dadurch gekennzeichnet, dass** die elektronische Steuereinheit in dem Gehäuse (1) des Ventilblokkes integriert angeordnet ist.

5. Vorrichtung nach einem der Ansprüche 1 bis 3, **dadurch gekenntzeichnet, dass** die elektronische Steuereinheit als gesonderte Baueinheit (14) auf elner Oberseite (15) des Ventilblockes (16) aufsetzbar und festlegbar angeordnet ist.

6. Vorrichtung nach einem der Ansprüche 1 bis 2, **dadurch gekennzeichnet, dass** die in der Seitenwand (2) des Funktionsträgers (1) angeordneten Kontaktelemente (8) mit einem Kabelstrang verbunden sind, der sich zwischen den Kontaktelementen des Funktionsträgers (1) und einer zentralen Steckeinheit des Funktionsträgers (1) erstreckt.

7. Vorrichtung nach Anspruch 6, **dadurch gekennzeichnet, dass** die einem gemeinsamen Bezugspotential zugeordneten Kabel des Kabelstrangs ausgehend von den Kontaktelementen des Funktionsträgers (1) zusammengeführt zu der zentralen Steckeinheit geführt sind.

8. Vorrichtung nach einem der Ansprüche 1 bis 7, **dadurch gekennzeichnet, dass** die Kontaktelemente (8) der Magnetspule (5) oder die in der Seitenwand (2) eingefassten Kontaktelemente als in axialer Richtung orientierte Kontaktstifte (8, 13) ausgebildet sind und dass die zu denselben korrespondierenden, in der Seitenwand (2) eingefassten Kontaktelemente bzw. die Kontaktelemente der Magnetspule (5) als Aufnahmen ausgebildet sind, in die die Kontaktstifte (8, 13) klemmend einsteckbar sind.

9. Magnetspule, insbesondere zur Verwendung In einer Vorrichtung nach einem der Ansprüche 1 bis 8, mit einem hohizylinderförmign Wicklungsträger, der eine Wicklungsaufnahme aufweist zur Aufnahme eines Wicklungsdrahtes, wobei Enden des Wicklungsdrahtes mit von außen zugänglichen Kontaktstiften verbunden sind, **dadurch gekennzeichnet, dass** die Kontaktstifte (8) mit einem Inneren Ende (22) in die Wicklungsaufnahme (20) eingreifen, wobei das innere Ende (22) mit dem Ende des Wicklungsdrahtes (21) elektrisch verbunden ist, und dass der Wicklungsträger (18) umfangsseitig durch eine passgenaue Gehäusehülse (24) umschlossen ist.

10. Magnetspule nach Anspruch 9, **dadurch gekennzeichnet, dass** der Wicklungsträger (18) eine die Wicklungsaufnahme (20) begrenzende Radialwand (19) aufweist, die Durchgangsbohrungen (23) aufweist zur lagerichtigen Positionierung der Kontaktstifte (8) am Wicklungsträger (18).

11. Magnetspule nach Anspruch 9 oder 10, **dadurch gekennzeichnet, dass** der in der Gehäusehülse (24) eingefasste Wicklungsträger (18) an einer offenen Stirnseite durch eine Kreisringplatte (25) abgedeckt ist, die zu den Kontaktelementen (8) korrespondierende Öffnungen (26) aufweist, und dass zwischen der Kreisringplatte (25) und der Gehäusehülse (25) eine krelsringförmige Dichtung (9) angeordnet ist.

## Claims

1. A device for contacting a setting unit (5) with electrical terminals of a function carrier (1, 14), in particular a hydraulic valve block (1, 14), wherein the setting unit projects with a solenoid coil (5) from the function carrier (1, 14), wherein contact elements (8) are arranged in an end region (7) of the setting unit (5), that faces towards the valve block (1, 14), in such a way that the contact elements (8) can be directly electrically connected at the valve block (1, 14) and **characterised in that** the setting unit includes a solenoid coil (5) and the solenoid coil (5) can be pushed on to a tubular frame (4) projecting from side walls (2) of the valve block (1) and with an annular surface (10) bearing against the side wall (2) can be connected to corresponding contact elements engaged in the side wall (2).

2. A device according to claim 1 **characterised in that** the contact elements (8) of the setting unit (5) are arranged at an end (10) of the setting unit (5), that faces towards the function carrier (1, 14).

3. A device according to one of claims 1 and 2 **characterised in that** the contact elements integrated in the side wall (2) form electrical terminals for an electronic control unit, by means of which the valves arranged in the control block (1) are controllable.

4. A device according to one of claims 1 to 3 **characterised in that** the electronic control unit is arranged integrated in the housing (1) of the valve block.

5. A device according to one of claims 1 to 3 **characterised in that** the electronic control unit is arranged as a separate structural unit (14) which can be fitted on and fixed on a top side (15) of the valve block (16).

6. A device according to one of claims 1 and 2 **characterised in that** the contact elements (8) arranged in the side wall (2) of the function carrier (1) are connected to a cable line extending between the contact elements of the function carrier (1) and a central plug unit of the function carrier (1).

7. A device according to claim 6 **characterised in that** the cables of the cable line, that are associated with a common reference potential, are guided from the contact elements of the function carrier (1) in a condition of being brought together to the central plug unit.

8. A device according to one of claims 1 to 7 **characterised in that** the contact elements (8) of the solenoid coil (5) or the contact elements engaged in the side wall (2) are in the form of contact pins (8, 13) oriented in the axial direction and the contact elements which correspond thereto and which are engaged in the side wall (2) or the contact elements of the solenoid coil (5) are in the form of receiving means into which the contact pins (8, 13) can be clampingly inserted.

9. A solenoid coil, in particular for use in a device according to one of claims 1 to 8, comprising a hollow-cylindrical winding carrier which has a winding receiving means for receiving a winding wire, wherein ends of the winding wire are connected to contact pins accessible from the exterior, **characterised in that** the contact pins (8) engage with an inner end (22) into the winding receiving means (20), wherein the inner end (22) is electrically connected to the end of the winding wire (21) and the winding carrier (18) is surrounded at the peripheral side by an accurately fitting housing sleeve (24).

10. A solenoid coil according to claim 9 **characterised in that** the winding carrier (18) has a radial wall (19) which delimits the winding receiving means (20) and which has through bores (23) for positionally correct positioning of the contact pins (8) on the winding carrier (18).

11. A solenoid coil according to claim 9 or claim 10 **characterised in that** the winding carrier (18) engaged in the housing sleeve (24) is covered at an open end by a circular ring plate (25) having openings (26) corresponding to the contact elements (8) and that a seal (9) in the shape of a circular ring is arranged between the circular ring plate (25) and the housing sleeve (24).

## Revendications

1. Dispositif pour établir le contact entre une unité de régulation (5) et des raccords électriques d'un ensemble fonctionnel (1, 14), en particulier d'un bloc de vannes hydrauliques (1, 14), l'unité de régulation s'étendant avec une bobine d'électro-aimant (5) à partir de l'ensemble fonctionnel (1, 14), des éléments de contact (8) étant disposés dans une partie frontale (7), tournée vers le bloc de vannes (1, 14), de l'unité de régulation (5), de manière telle que les éléments de contact (8) puissent être reliés électriquement directement sur le bloc de vannes (1, 14), **caractérisé par le fait que** l'unité de régulation comporte une bobine d'électroaimant (5) et la bobine d'électro-aimant (5) peut être glissée sur un châssis tubulaire (4) faisant saillie depuis des parois latérales (2) du bloc de vannes (1) et peut être connectée à des éléments de contact correspondants, montés dans la paroi latérale (2), avec application d'une surface annulaire (10) contre la paroi latérale (2).

2. Dispositif selon la revendication 1, **caractérisé par le fait que** les éléments de contact (8) de l'unité de régulation (5) sont disposés sur une face frontale (10) de l'unité de régulation (5) qui est tournée vers l'ensemble fonctionnel (1, 14).

3. Dispositif selon une des revendications 1 à 2, **caractérisé par le fait que** les éléments de contact intégrés dans la paroi latérale (2) constituent des raccords électriques pour une unité de commande électronique qui permet de commander les vannes disposées dans le bloc de vannes (1).

4. Dispositif selon une des revendications 1 à 3, **caractérisé par le fait que** l'unité de commande électronique est intégrée dans le carter (1) du bloc de vannes.

5. Dispositif selon une des revendications 1 à 3, **caractérisé par le fait que** l'unité de commande électronique est installée en tant qu'unité modulaire (14) distincte, de manière à pouvoir être posée et fixée sur une face supérieure (15) du bloc de vannes (16).

6. Dispositif selon une des revendications 1 à 2, **caractérisé par le fait que** les éléments de contact (8) disposés dans la paroi latérale (2) de l'ensemble fonctionnel (1) sont reliés à un faisceau électrique qui s'étend entre les éléments de contact de l'ensemble fonctionnel (1) et une unité à enfichage centrale de l'ensemble fonctionnel (1).

7. Dispositif selon la revendication 6, **caractérisé par le fait que** les câbles du faisceau électrique qui sont associés à un potentiel de référence commun sont rassemblés à partir des éléments de contact de l'ensemble fonctionnel (1) et mènent à l'unité à enfichage centrale.

8. Dispositif selon une des revendications 1 à 7, **caractérisé par le fait que** les éléments de contact (8) de la bobine d'électro-aimant (5) ou les éléments de contact montés dans la paroi latérale (2) sont réalisés sous forme de broches de contact (8, 13) orientées dans la direction axiale, et **par le fait que** les éléments de contact correspondant à ceux-ci, montés dans la paroi latérale (2), et/ou les éléments de contact de la bobine d'électro-aimant (5) sont réalisés sous forme de logements dans lesquels peuvent être enfichées avec serrage les broches de contact (8, 13).

9. Bobine d'électro-aimant, en particulier pour une utilisation dans un dispositif selon une des revendications 1 à 8, comprenant un support d'enroulement en forme de cylindre creux, qui présente un moyen de réception destiné à recevoir le fil d'enroulement, des extrémités du fil d'enroulement étant reliées à des broches de contact accessibles de l'extérieur, **caractérisée par le fait que** les broches de contact (8) s'engagent avec une extrémité intérieure (22) dans le moyen de réception d'enroulement (20), l'extrémité intérieure (22) étant raccordée électriquement à l'extrémité du fil d'enroulement (21), et **par le fait que** le support d'enroulement (18) est entouré sur le pourtour par un e douille formant boîtier (24) montée avec ajustage précis.

10. Bobine d'électro-aimant selon la revendication 9, **caractérisée par le fait que** le support d'enroulement (18) présente une paroi radiale (19) qui délimite le moyen de réception d'enroulement (20) et comporte des trous traversants (23) pour le positionnement correct des broches de contact (8) sur le support d'enroulement (18).

11. Bobine d'électro-aimant selon la revendication 9 ou 10, **caractérisée par le fait que** le support d'enroulement (18) entouré par la douille-boîtier (24) est recouvert sur une face frontale ouverte par une plaque en anneau de cercle (25) qui présente des ouvertures (26) correspondant aux éléments de contact (8), et **par le fait qu'**un joint d'étanchéité (9) en anneau de cercle est disposé entre la plaque en anneau de cercle (25) et la douille-boîtier (24).
